(19) Europäisches Patentamt
European Patent Office
Office européen des brevets

(11) **EP 2 895 826 B1**

(12) **FASCICULE DE BREVET EUROPEEN**

(45) Date de publication et mention
de la délivrance du brevet:
**01.05.2019 Bulletin 2019/18**

(21) Numéro de dépôt: **13745447.6**

(22) Date de dépôt: **26.06.2013**

(51) Int Cl.:
**G01G 19/08** *(2006.01)*          **B60W 40/13** *(2012.01)*

(86) Numéro de dépôt international:
**PCT/FR2013/051482**

(87) Numéro de publication internationale:
**WO 2014/041263 (20.03.2014 Gazette 2014/12)**

(54) **DISPOSITIF ET PROCEDE D'ESTIMATION DE LA CHARGE D'UN VEHICULE AUTOMOBILE**

VORRICHTUNG UND VERFAHREN ZUR SCHÄTZUNG DER LADUNG EINES KRAFTFAHRZEUGS

DEVICE AND METHOD FOR ESTIMATING THE CHARGE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2012 FR 1258520**

(43) Date de publication de la demande:
**22.07.2015 Bulletin 2015/30**

(73) Titulaire: **RENAULT s.a.s.**
**92100 Boulogne-Billancourt (FR)**

(72) Inventeurs:
• **PLANCHE, Grégory**
**F-91400 Orsay (FR)**
• **VERBEKE, Benoît**
**F-91600 Savigny-sur-orge (FR)**
• **ZAOUI, Kamal**
**F-78120 Rambouillet (FR)**

(56) Documents cités:
**WO-A1-2006/033612**

**Description**

La présente invention concerne un dispositif et un procédé d'estimation de la charge d'un véhicule automobile à propulsion thermique ou hybride.

La connaissance de la charge d'un véhicule automobile est nécessaire au bon fonctionnement de nombreux dispositifs embarqués dans le véhicule, notamment comme les dispositifs de gestion de freinage ou de gestion de boîte de vitesse automatique.

Il existe des dispositifs d'estimation de masse d'un véhicule automobile.

On peut se référer à cet égard au document FR 2 857 090 qui décrit un procédé d'estimation de la masse reposant sur un algorithme de moindres carrés récursifs. Toutefois, un tel procédé d'estimation ne permet pas d'estimer rapidement la masse du véhicule automobile.

On peut également se référer au document EP 1 298 020 qui décrit un procédé pour déterminer la masse d'un véhicule automobile en tant compte de différentes situations de conduite. Toutefois, un tel procédé ne permet pas d'estimer la masse du véhicule à l'arrêt du véhicule.

On peut également se référer au document WO 2006/033612, dont l'objectif est de commander la transmission en fonction de la masse de véhicule calculée et d'éviter des changements de vitesse incorrects lorsque le véhicule est en roulement.

Par ailleurs, dans les véhicules actuels, l'utilisateur doit appuyer sur un bouton de commande lorsque le véhicule est chargé. Le bouton de commande va ensuite activer un programme de pilotage du calculateur de la transmission automatique adaptée à un véhicule chargé ou non chargé, dit « nominal ». Toutefois, l'implantation d'un tel bouton de commande est relativement coûteuse.

La présente invention a donc pour objet de remédier à ces inconvénients.

Le but de l'invention est donc de fournir un dispositif et un procédé permettant d'obtenir rapidement une information sur le chargement du véhicule automobile, même lorsque le véhicule est à l'arrêt, sans nécessiter un appui sur un bouton de commande par l'utilisateur du véhicule.

L'invention a pour objet le pilotage du calculateur d'une transmission automatique en fonction de l'état de chargement du véhicule automobile, afin d'optimiser au mieux le fonctionnement du groupe motopropulseur.

L'invention concerne tout type de moteur, à chaîne propulsion thermique ou hybride.

Dans un mode de réalisation, l'invention concerne un dispositif d'estimation de la charge d'un véhicule automobile à propulsion thermique ou hybride comportant une transmission automatique, comprenant un module de détermination du chargement du véhicule capable de déterminer si le véhicule est chargé et un module d'activation d'un programme de pilotage de la transmission automatique en fonction de la détermination du chargement du véhicule.

Le module de détermination du chargement comprend un premier bloc d'estimation d'une première valeur de pente en fonction de l'accélération du véhicule issue de la forme motrice et de l'accélération longitudinale du véhicule, un deuxième bloc d'estimation d'une deuxième valeur de pente en fonction du moment d'inertie appliqué à une roue non motrice du véhicule et des couples moteur et résistant et un troisième bloc de détermination du chargement du véhicule en fonction des première et deuxième valeur de pente.

Ainsi, on obtient rapidement et économiquement une information sur le chargement du véhicule automobile, même lorsque le véhicule est à l'arrêt, sans devoir appuyer sur un bouton de commande.

Avantageusement, le premier bloc d'estimation d'une première valeur de pente comprend un module de calcul de l'accélération du véhicule issue de la forme motrice correspondant à la dérivée de la vitesse de rotation des roues en fonction du temps.

Le premier bloc d'estimation d'une première valeur de pente peut comprendre un comparateur capable de calculer la première valeur de pente en fonction de la dérivée de la vitesse de rotation des roues en fonction du temps et de l'accélération longitudinale du véhicule.

Avantageusement, le deuxième bloc d'estimation d'une deuxième valeur de pente comprend un module de détermination du moment d'inertie en fonction de la masse du véhicule, de l'inertie du moteur, du rapport de réduction entre la sortie et l'entrée du moteur et du rayon de la roue, un module de multiplication du moment d'inertie avec la dérivée de la vitesse de rotation de la roue en fonction du temps.

Le deuxième bloc d'estimation d'une deuxième valeur de pente peut comprendre un module de calcul du couple résistant en fonction du rayon de la roue, de la force aérodynamique et de la force de roulement.

Avantageusement, le troisième bloc comprend un bloc d'estimation recevant en entrée les première et deuxième valeurs de pente et capable de déterminer une valeur de charge.

Par exemple, le troisième bloc comprend un moyen de comparaison de la valeur de charge avec une valeur seuil et capable de déterminer le chargement du véhicule et de transmettre une consigne de l'état chargé ou non chargé au module d'activation du pilotage du calculateur de la transmission automatique en mode chargé ou en mode nominal.

L'accélération longitudinale du véhicule est, par exemple, déterminée par un accéléromètre.

Selon un deuxième aspect, l'invention concerne un procédé d'estimation de la charge d'un véhicule automobile à propulsion thermique ou hybride comportant une transmission automatique, dans lequel on détermine si le véhicule est chargé et on d'active un programme de pilotage de la transmission automatique en fonction de la détermination du chargement du véhicule.

On estime une première valeur de pente en fonction de l'accélération du véhicule issue de la forme motrice et de l'accélération longitudinale du véhicule, une deuxième valeur de pente en fonction du moment d'inertie appliqué à une roue non motrice du véhicule et des couples moteur et résistant et on détermine le chargement du véhicule en fonction des première et deuxième valeurs de pente.

Avantageusement, on calcule l'accélération du véhicule issue de la forme motrice en dérivant la vitesse de rotation des roues en fonction du temps, et on compare la dérivée de la vitesse de rotation des roues en fonction du temps et l'accélération longitudinale du véhicule.

Par exemple, on détermine le moment d'inertie en fonction de la masse du véhicule, de l'inertie du moteur, du rapport de réduction entre la sortie et l'entrée du moteur et du rayon de la roue, un module de multiplication du moment d'inertie avec la dérivée de la vitesse de rotation de la roue en fonction du temps, et on calcule le couple résistant en fonction du rayon de la roue, de la force aérodynamique et de la force de roulement.

On détermine une valeur de charge en fonction des première et deuxième valeurs de pente.

On peut, en outre, comparer la valeur de charge avec une valeur seuil et on détermine le chargement du véhicule.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 représente schématiquement le dispositif d'estimation de la charge d'un véhicule ; et
- la figure 2 illustre le module de détermination du chargement du véhicule selon la figure 1.

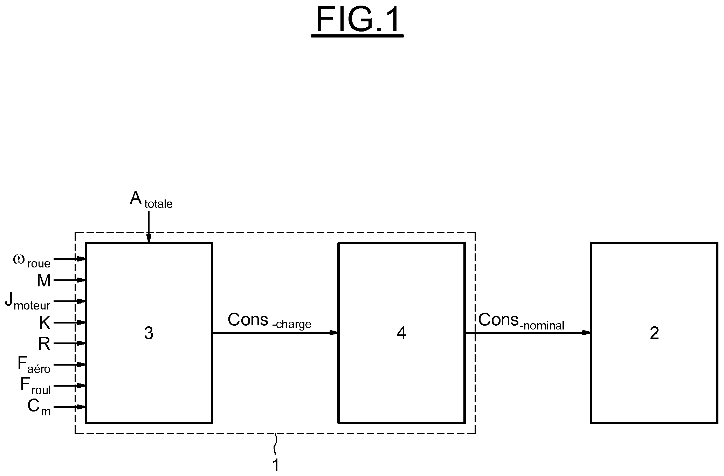

Le dispositif de d'estimation de la charge d'un véhicule automobile, selon la figure 1, comporte une unité de commande électronique 1 destinée à piloter le calculateur 2 de la transmission automatique (non représentée) du véhicule automobile.

L'unité de commande 1 comprend un module de détermination 3 du chargement du véhicule capable de déterminer si le véhicule est chargé et d'envoyer un signal de consigne du chargement Cons $_{charge}$ à un module d'activation 4 du programme de pilotage du calculateur 2 en fonction du chargement du véhicule. Le calculateur 2 de la transmission automatique est piloté par défaut en mode chargé. Lorsque le module de détermination 3 du chargement du véhicule détermine que le véhicule n'est pas chargé, le module d'activation du pilotage 4 active le mode de pilotage nominal en envoyant une consigne de pilotage en mode nominal Cons $_{nominal}$ au calculateur 2.

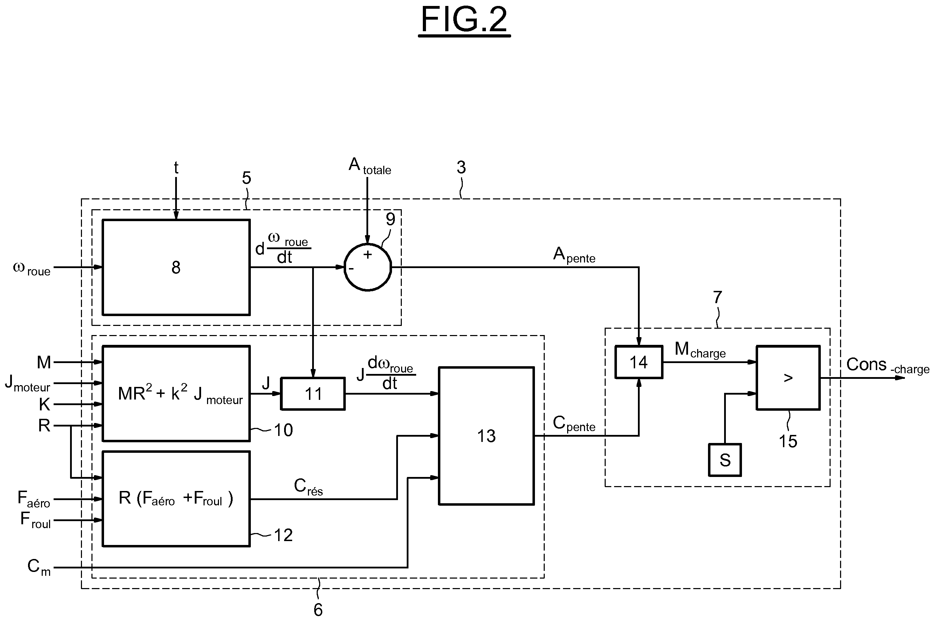

Le module de détermination 3 du chargement du véhicule, illustré en détail à la figure 2, reçoit en entrée la vitesse de rotation de la roue $\omega_{roue}$, l'accélération longitudinale du véhicule $A_{totale}$, la masse du véhicule automobile m, l'inertie du moteur $J_{moteur}$, le rapport de réduction entre la sortie et l'entrée du moteur K, le rayon de la roue R, la force aérodynamique $F_{aéro}$, la force de roulement $F_{roul}$ et le couple moteur $C_m$.

Le module de détermination 3 du chargement du véhicule comprend un premier bloc 5 d'estimation d'une première valeur de la pente de la route $A_{pente}$, un deuxième bloc 6 d'estimation d'une deuxième valeur de la pente de la route $C_{pente}$ et un bloc 7 de détermination du signal de consigne du chargement Cons $_{charge}$.

Le premier bloc 5 d'estimation d'une première valeur de la pente de la route $A_{pente}$ reçoit en entrée une valeur d'accélération $A_{totale}$ issue d'un accéléromètre (non représenté) mesurant l'accélération longitudinale du véhicule automobile et une valeur de la vitesse de rotation des roues $\omega_{roue}$ non motrices du véhicule automobile en fonction du temps mesurée par des capteurs (non représenté).

Les capteurs mesurant la vitesse de rotation des roues sont, par exemple, les capteurs utilisés pour la mise en oeuvre d'un système de freinage antiblocage appelé ABS du véhicule.

L'accéléromètre mesure l'accélération longitudinale ou totale $A_{totale}$ correspondant à la somme de l'accélération due à la pente $A_{pente}$ de la route et de l'accélération liée au moteur du véhicule $A_{moteur}$. Ainsi, à l'arrêt sur une roue horizontale, la valeur mesurée par l'accéléromètre est nulle.

L'unité de commande électronique 1 reçoit les informations transmises par les différents capteurs et les transmets au premier bloc 5.

Le premier bloc 5 comprend un module 8 de calcul de la dérivée par rapport au temps du signal représentatif de la vitesse de rotation des roues $\omega_{roue}$ en fonction du temps t, qui est égale à l'accélération liée au moteur du véhicule :

$$\frac{d\omega_{Roue}}{dt} = A_{moteur}$$

Le premier bloc 5 comprend un comparateur 9 entre l'accélération longitudinale $A_{totale}$ et l'accélération liée au moteur du véhicule $A_{moteur}$ et détermine l'accélération résultante $A_{pente}$ du véhicule liée à la pente de la route :

$$A_{pente} = A_{totale} - A_{moteur}$$

L'inclinaison a de la route à l'instant t peut être déterminée en fonction de l'accélération résultante $A_{pente}$ selon le principe fondamental de la dynamique :

$$m.A_{pente} = m.g.sin(\alpha) \qquad : équation~(1)$$

d'où:

$$\alpha = arcsin(A_{pente}/g)$$

où g est la constante d'accélération gravitationnelle terrestre, égale à environ 9,81 m/s$^2$ et où la fonction arcsin désigne la fonction réciproque de la fonction sinus.

L'inclinaison de la route $\alpha$ est exprimée ici en degrés d'angle et peut être exprimée en pourcentage de la route suivant l'équation suivante :

$$P = 100.tan(\alpha) = 100.tan~(arcsin(A_{pente}/g)),$$

où tan désigne la fonction tangente.

Le deuxième bloc 6 d'estimation d'une deuxième valeur de la pente de la route $C_{pente}$ comprend un module de détermination 10 du moment d'inertie J de la roue en fonction de la masse du véhicule automobile m, de l'inertie du moteur $J_{moteur}$, du le rapport de réduction entre la sortie et l'entrée du moteur K, et du le rayon de la roue R, un module de multiplication 11 du moment d'inertie J avec la dérivée de la vitesse de rotation de la roue $\omega_{roue}$ déterminée par le module de dérivation 8, un module de calcul 12 du couple résistant $C_{rés}$ en fonction du rayon de la roue R, la force aérodynamique $F_{aéro}$ et la force de roulement $F_{roul}$ et un module de détermination 13 d'un couple $C_{pente}$ lié à la force de déclivité de la route.

L'équation du bilan des couples au niveau d'une des roues non motrices est déterminée par l'application de la loi fondamentale de la dynamique, selon l'équation suivante:

$$J\frac{d\omega_{Roue}}{dt} = C_m - C_{rés} - C_{pente}$$

Avec :

$J$ l'inertie de la roue, exprimée en kg.m$^2$ ;

$\dfrac{d\omega_{Roue}}{dt}$, l'accélération de la roue, exprimée en rad.s$^{-2}$ ;

$C_m$, le couple moteur, exprimé en N.m;
$C_{rés}$, le couple résistant, exprimé en N.m, et
$C_{pente}$ le couple lié à la déclivité de la route, exprimé en N.m.

L'inertie de la roue J issue du module de détermination 10 du moment d'inertie J est égale à :

$$J = J_{véhicule} + K^2.J_{moteur},$$

exprimée en kg.m$^2$
Avec :

$J_{véhicule} = m.R^2$, l'inertie du véhicule automobile, M, la masse du véhicule automobile, exprimée en kg, et R le rayon de la roue, exprimée en m ;

K, le rapport de réduction entre la sortie et l'entrée en moteur la roue, qui est une constante mécanique

$J_{moteur}$, l'inertie du moteur, qui est une constante mécanique, exprimée en kg.m$^2$.

Le couple résistant C$_{rés}$ calculé par le module de calcul 12 correspond à la somme des efforts résistants appliqués sur la roue :

$$C_{rés} = R.(F_{aéro} + F_{roul})$$

Avec :

R le rayon de la roue, exprimée en m ;

$F_{aéro}$, l'effort aérodynamique vu par le véhicule, exprimé en N ; $F_{aéro} = \dfrac{1}{2}.\rho.S.C_x.V^2$ , où $\rho$ est la masse volumique de l'air, S la surface de référence du véhicule, C$_x$ le coefficient aérodynamique du véhicule et V la vitesse du véhicule.

$F_{roul}$, la force résistive au contact roue sur route, exprimé en N, déterminée à l'aide d'une cartographie fonction de la vitesse du véhicule.

F$_{aéro}$ correspond à l'équation suivante :
On obtient ainsi par le module de détermination 13 le couple de pente C$_{pente}$ :

$$C_{pente} = J \frac{d\omega_{Roue}}{dt} - C_m + C_{rés} = (m.R^2 + K^2.J_{moteur}) \frac{d\omega_{Roue}}{dt} - C_m + R.(F_{aéro} + F_{roul}) \ :$$

$$\text{équation (2)}$$

Avec :

$J_{véhicule} = m.R^2$, l'inertie du véhicule automobile, m, la masse du véhicule automobile, exprimée en kg, et R le rayon de la roue, exprimée en m ;
K, le rapport de réduction entre la sortie et l'entrée en moteur la roue, qui est une constante mécanique
$J_{moteur}$, l'inertie du moteur, qui est une constante mécanique, exprimée en kg.m$^2$.
Le bloc 7 de détermination du signal de consigne du chargement Cons charge comprend un bloc d'estimation 14 recevant en entrée la valeur de l'accélération résultante A$_{pente}$ estimée par le premier bloc 5 et la valeur du couple de pente C$_{pente}$ estimée par le deuxième bloc 6.

Le couple de pente C$_{pente}$ étant également égal à :

$$C_{pente} = m.R.g.\sin(\alpha) : \text{équation (3)}$$

Avec :

m, la masse du véhicule, exprimé en kg ;
R, le rayon de la roue, exprimé en m;
g, la coefficient de pesanteur égal à 9.81 m/s$^2$ ;
a, la pente de la route, exprimée en degrés.

D'après les équations (1) et (3), on obtient :
$m.R.A_{pente} = m.R.g.\sin(\alpha) = C_{pente}$
*Donc, selon l'équation (2),*

$$m.R.A_{pente} = (m.R^2 + K^2.J_{moteur}) \frac{d\omega_{Roue}}{dt} - C_m + R.(F_{aéro} + F_{roul})$$

On en déduit la masse m du véhicule :

$$m = \frac{(K^2.J_{moteur})\dfrac{d\omega_{Roue}}{dt}) - C_{m} + R.(F_{a\acute{e}ro} + F_{roul})}{R(A_{pente} - R.\dfrac{d\omega_{Roue}}{dt})}$$

Le bloc d'estimation 14 détermine ainsi une valeur de charge Mcharge, exprimée en kg, correspondant à la différence entre la masse du véhicule m et la masse M_vide du véhicule à vide, renseignée au préalable.

$$M_{\_charge} = m - M_{\_vide} ;$$

La valeur de charge $M_{\_charge}$ est ensuite comparée dans un comparateur 15 à une valeur seuil S.

Lorsque la valeur de charge $M_{\_charge}$ dépasse la valeur seuil S, le bloc 7 détermine un signal de consigne du chargement Cons_charge et le transmet au module d'activation 4 du programme de pilotage en mode chargé. Lorsque la valeur de charge $M_{\_charge}$ est inférieure à la valeur seuil S, le bloc 7 détermine un signal de consigne du chargement Cons_charge et le transmet au module d'activation du programme de pilotage en mode nominal, c'est à dire en mode non chargé.

Ainsi, même lorsque le véhicule est à l'arrêt le calculateur de la transmission automatique est piloté en mode chargé.

## Revendications

1. Dispositif d'estimation de la charge d'un véhicule automobile à propulsion thermique ou hybride comportant une transmission automatique, comprenant un module de détermination du chargement du véhicule (3) capable de déterminer si le véhicule est chargé et un module d'activation (4) d'un programme de pilotage de la transmission automatique (2) en fonction de la détermination du chargement du véhicule (Cons_charge), le module de détermination du chargement (3) comprenant un premier bloc d'estimation (5) d'une première valeur dépendant de la pente ($A_{pente}$) en fonction de l'accélération du véhicule ($A_{moteur}$) issue de la force motrice et de l'accélération longitudinale ($A_{totale}$) du véhicule, un deuxième bloc d'estimation (6) d'une deuxième valeur dépendant de la pente ($C_{pente}$) en fonction du moment d'inertie (J) appliqué à une roue non motrice du véhicule et des couples moteur et résistant ($C_m$, $C_{rés}$) et un troisième bloc (7) de détermination du chargement du véhicule (Cons_charge) en fonction des première et deuxième valeurs dépendant de la pente ($A_{pente}$, $C_{pente}$), **caractérisé en ce que** le troisième bloc (7) comprend un bloc d'estimation (14) recevant en entrée les première et deuxième valeurs dépendant de la pente ($A_{pente}$, $C_{pente}$) et capable de déterminer une valeur de charge ($M_{\_charge}$) et un moyen de comparaison (15) de la valeur de charge ($M_{\_charge}$) avec une valeur seuil (S) et capable de déterminer et de transmettre un signal de consigne du chargement du véhicule (Cons_charge) au module d'activation (4) du programme de pilotage de la transmission automatique (2).

2. Dispositif selon la revendication 1, dans lequel le premier bloc d'estimation (5) d'une première valeur dépendant de la pente ($A_{pente}$) comprend un module de calcul (8) de l'accélération du véhicule ($A_{moteur}$) issue de la forme motrice correspondant à la dérivée de la vitesse de rotation des roues ($\omega_{roue}$) en fonction du temps (t).

3. Dispositif selon la revendication 2, dans lequel le premier bloc d'estimation (5) d'une première valeur dépendant de la pente ($A_{pente}$) comprend un comparateur (9) capable de calculer la première valeur de pente ($A_{pente}$) en fonction de la dérivée de la vitesse de rotation des roues ($\omega_{roue}$) en fonction du temps (t) et de l'accélération longitudinale ($A_{totale}$) du véhicule.

4. Dispositif selon l'une quelconque des revendications 2 ou 3, dans lequel le deuxième bloc d'estimation (6) d'une deuxième valeur dépendant de la pente ($C_{pente}$) comprend un module de détermination (10) du moment d'inertie (J) en fonction de la masse (m) du véhicule, de l'inertie du moteur ($J_{moteur}$), du rapport de réduction entre la sortie et l'entrée du moteur (K) et du rayon (R) de la roue, un module de multiplication (11) du moment d'inertie (J) avec la dérivée de la vitesse de rotation de la roue ($\omega_{roue}$) en fonction du temps (t).

**5.** Dispositif selon la revendication 4, dans lequel le deuxième bloc d'estimation (6) d'une deuxième valeur dépendant de la pente ($C_{pente}$) comprend un module de calcul (12) du couple résistant ($C_{rés}$) en fonction du rayon (R) de la roue, de la force aérodynamique ($F_{aéro}$) et de la force de roulement ($F_{roul}$).

**6.** Dispositif selon l'une quelconque des revendications 1 à 3, dans lequel l'accélération longitudinale ($A_{totale}$) du véhicule est déterminée par un accéléromètre.

**7.** Procédé d'estimation de la charge d'un véhicule automobile à propulsion thermique ou hybride comportant une transmission automatique, dans lequel on détermine si le véhicule est chargé et on active un programme de pilotage de la transmission automatique en fonction de la détermination du chargement du véhicule, **caractérisé en ce que** l'on estime une première valeur dépendant de la pente en fonction de l'accélération du véhicule issue de la force motrice et de l'accélération longitudinale du véhicule, une deuxième valeur dépendant de la pente en fonction du moment d'inertie appliqué à une roue non motrice du véhicule et des couples moteur et résistant et on détermine le chargement du véhicule en fonction des première et deuxième valeurs dépendant de la pente, **caractérisé en ce que** l'on détermine une valeur de charge ($M_{\_charge}$) en fonction des première et deuxième valeurs dépendant de la pente ($A_{pente}$, $C_{pente}$), on compare la valeur de charge ($M_{\_charge}$) avec une valeur seuil (S) et on détermine et on transmet un signal de consigne du chargement du véhicule ($Cons_{\_charge}$) au module d'activation (4) du programme de pilotage de la transmission automatique (2).

**8.** Procédé selon la revendication 7, dans lequel on calcule l'accélération du véhicule ($A_{moteur}$) issue de la force motrice en dérivant la vitesse de rotation des roues ($\omega_{roue}$) en fonction du temps (t), et on compare la dérivée de la vitesse de rotation des roues ($\omega_{roue}$) en fonction du temps (t) et l'accélération longitudinale ($A_{totale}$) du véhicule.

**9.** Procédé selon l'une quelconque des revendications 7 ou 8, dans lequel on détermine le moment d'inertie (J) en fonction de la masse (m) du véhicule, de l'inertie du moteur ($J_{moteur}$), du rapport de réduction entre la sortie et l'entrée du moteur (K) et du rayon (R) de la roue, un module de multiplication (11) du moment d'inertie (J) avec la dérivée de la vitesse de rotation de la roue ($\omega_{roue}$) en fonction du temps (t), et on calcule le couple résistant ($C_{rés}$) en fonction du rayon (R) de la roue, de la force aérodynamique ($F_{aéro}$) et de la force de roulement ($F_{roul}$).

**Patentansprüche**

**1.** Vorrichtung zur Schätzung der Ladung eines Kraftfahrzeugs mit thermischem oder Hybridantrieb, umfassend ein Automatikgetriebe, umfassend ein Modul (3) zur Bestimmung des Ladens des Fahrzeugs, das in der Lage ist zu bestimmen, ob das Fahrzeug geladen ist, und ein Modul (4) zur Aktivierung eines Steuerprogramms des Automatikgetriebes (2) als Funktion der Bestimmung des Ladens des Fahrzeugs ($Cons_{\_charge}$), wobei das Modul (3) zur Bestimmung des Ladens umfasst: einen ersten Schätzblock (5) eines ersten Werts in Abhängigkeit von der Steigung ($A_{pente}$) als Funktion der Beschleunigung ($A_{moteur}$) des Fahrzeugs aus der Antriebskraft und der longitudinalen Beschleunigung ($A_{totale}$ des Fahrzeugs, einen zweiten Schätzblock (6) eines zweiten Werts in Abhängigkeit von der Steigung ($C_{pente}$) als Funktion des Trägheitsmoments (J), das auf ein nicht angetriebenes Rad des Fahrzeugs ausgeübt wird, und des Antriebs- und Widerstandsdrehmoments ($C_m$, $C_{rés}$), und einen dritten Bestimmungsblock (7) des Ladens des Fahrzeugs ($Cons_{\_charge}$) als Funktion des ersten und zweiten Werts in Abhängigkeit von der Steigung ($A_{pente}$, $C_{pente}$) **dadurch gekennzeichnet, dass** der dritte Block (7) umfasst: einen Schätzblock (14), der am Eingang den ersten und zweiten Wert in Abhängigkeit von der Steigung ($A_{pente}$, $C_{pente}$) empfängt und in der Lage ist, einen Wert der Ladung ($M_{\_charge}$) zu bestimmen, und ein Vergleichsmittel (15) des Wert der Ladung ($M_{\_charge}$) mit einem Schwellenwert (S), und in der Lage ist, ein Signal des Sollwerts des Ladens des Fahrzeugs ($Cons_{\_charge}$) zu bestimmen und an das Modul (4) zur Aktivierung des Steuerprogramms des Automatikgetriebes (2) zu übertragen.

**2.** Vorrichtung nach Anspruch 1, wobei der erste Schätzblock (5) eines ersten Werts in Abhängigkeit von der Steigung ($A_{pente}$) ein Modul (8) zur Berechnung der Beschleunigung ($A_{moteur}$) des Fahrzeugs aus der Antriebsform entsprechend der Ableitung der Drehgeschwindigkeit der Räder ($\omega_{roue}$) als Funktion der Zeit (t) umfasst.

**3.** Vorrichtung nach Anspruch 2, wobei der erste Schätzblock (5) eines ersten Werts in Abhängigkeit von der Steigung ($A_{pente}$) einen Komparator (9) umfasst, der in der Lage ist, den ersten Wert der Steigung ($A_{pente}$) als Funktion der Ableitung der Drehgeschwindigkeit der Räder ($\omega_{roue}$) als Funktion der Zeit (t) und der longitudinalen Beschleunigung ($A_{totale}$) des Fahrzeugs zu berech-

nen.

4.  Vorrichtung nach einem der Ansprüche 2 oder 3,
    wobei der zweite Schätzblock (6) eines zweiten Werts in Abhängigkeit von der Steigung ($C_{pente}$) umfasst: ein Modul (10) zur Bestimmung des Trägheitsmoments (J) als Funktion der Masse (m) des Fahrzeugs, der Trägheit des Motors ($J_{moteur}$), des Verhältnisses der Reduktion zwischen dem Ausgang und dem Eingang des Motors (K) und des Radius (R) des Rads, und ein Modul (11) zur Multiplikation des Trägheitsmoments (J) mit der Ableitung der Drehgeschwindigkeit des Rads ($\omega_{roue}$) als Funktion der Zeit (t).

5.  Vorrichtung nach Anspruch 4,
    wobei der zweite Schätzblock (6) eines zweiten Werts in Abhängigkeit von der Steigung ($C_{pente}$) umfasst: ein Modul (12) zur Berechnung des Widerstandsdrehmoments ($C_{rés}$) als Funktion des Radius (R) des Rads, der aerodynamischen Kraft ($F_{aéro}$) und der Rollkraft ($F_{roul}$).

6.  Vorrichtung nach einem der Ansprüche 1 bis 3,
    wobei die longitudinale Beschleunigung ($A_{totale}$) des Fahrzeugs durch ein Akzelerometer bestimmt wird.

7.  Verfahren zur Schätzung der Ladung eines Kraftfahrzeugs mit thermischem oder Hybridantrieb, umfassend ein Automatikgetriebe, wobei bestimmt wird, ob das Fahrzeug geladen ist, und ein Steuerprogramm des Automatikgetriebes als Funktion der Bestimmung des Ladens des Fahrzeugs aktiviert wird,
    **dadurch gekennzeichnet, dass** geschätzt wird: ein erster Wert in Abhängigkeit von der Steigung als Funktion der Beschleunigung des Fahrzeugs aus der Antriebskraft und der longitudinalen Beschleunigung des Fahrzeugs, ein zweiter Wert in Abhängigkeit von der Steigung als Funktion des Trägheitsmoments, das auf ein nicht angetriebenes Rad des Fahrzeugs ausgeübt wird, und des Antriebs- und Widerstandsdrehmoments, und das Laden des Fahrzeugs als Funktion des ersten und zweiten Werts in Abhängigkeit von der Steigung bestimmt wird,
    **dadurch gekennzeichnet, dass** ein Wert der Ladung ($M_{\_charge}$) als Funktion des ersten und zweiten Werts in Abhängigkeit von der Steigung ($A_{pente}$, $C_{pente}$) bestimmt wird, der Wert der Ladung ($M_{\_charge}$) mit einem Schwellenwert (S) verglichen wird, und ein Signal des Sollwerts des Ladens des Fahrzeugs ($Cons_{\_charge}$) bestimmt wird und an das Modul (4) zur Aktivierung des Steuerprogramms des Automatikgetriebes (2) übertragen wird.

8.  Verfahren nach Anspruch 7,
    wobei die Beschleunigung ($A_{moteur}$) des Fahrzeugs aus der Antriebskraft durch Ableitung der Drehgeschwindigkeit der Räder ($\omega_{roue}$) als Funktion der Zeit (t) berechnet wird, und die Ableitung der Drehgeschwindigkeit der Räder ($\omega_{roue}$) als Funktion der Zeit (t) und die longitudinale Beschleunigung ($A_{totale}$) des Fahrzeugs verglichen werden.

9.  Verfahren nach einem der Ansprüche 7 oder 8,
    wobei das Trägheitsmoment (J) als Funktion der Masse (m) des Fahrzeugs, der Trägheit des Motors ($J_{moteur}$), des Verhältnisses der Reduktion zwischen dem Ausgang und dem Eingang des Motors (K) und des Radius (R) des Rads bestimmt wird, ein Modul (11) zur Multiplikation des Trägheitsmoments (J) mit der Ableitung der Drehgeschwindigkeit des Rads ($\omega_{roue}$) als Funktion der Zeit (t), und das Widerstandsdrehmoment ($C_{rés}$) als Funktion des Radius (R) des Rads, der aerodynamischen Kraft ($F_{aéro}$) und der Rollkraft ($F_{roul}$) berechnet wird.

**Claims**

1.  Device for estimating the load of a combustion or hybrid powered motor vehicle, comprising an automatic transmission, comprising a module for determining the loading of the vehicle (3) capable of determining if the vehicle is loaded, and a module for activating (4) a program for controlling the automatic transmission (2) on the basis of the determination of the loading of the vehicle ($Cons_{\_load}$), the module for determining the loading (3) comprising a first unit for estimating (5) a first value dependent on the slope ($A_{slope}$) on the basis of the acceleration of the vehicle ($A_{engine}$) derived from the driving force and the longitudinal acceleration ($A_{total}$) of the vehicle, a second unit for estimating (6) a second value dependent on the slope ($C_{slope}$) on the basis of the moment of inertia (J) applied to a non-driving wheel of the vehicle and the engine and resistant torques ($C_m$, $C_{res}$), and a third unit (7) for determining the loading of the vehicle ($Cons_{\_load}$) on the basis of the first and second values dependent on the slope ($A_{slope}$, $C_{slope}$), **characterized in that** the third unit (7) comprises an estimation unit (14) receiving at the input the first and second values dependent on the slope ($A_{slope}$, $C_{slope}$) and capable of determining a load value ($M_{\_load}$) and a means for comparing (15) the load value ($M_{\_load}$) with a threshold value (S) and capable of determining and of transmitting a setpoint signal of the loading of the vehicle ($Cons_{\_load}$) to the module for activating (4) the program for controlling the automatic transmission (2).

2. Device according to Claim 1, wherein the first unit for estimating (5) a first value dependent on the slope ($A_{slope}$) comprises a module for calculating (8) the acceleration of the vehicle ($A_{engine}$) derived from the driving means corresponding to the derivative of the speed of rotation of the wheels ($\omega_{wheel}$) as a function of time (t).

3. Device according to Claim 2, wherein the first unit for estimating (5) a first value dependent on the slope ($A_{slope}$) comprises a comparator (9) capable of calculating the first slope value ($A_{slope}$) on the basis of the derivative of the speed of rotation of the wheels ($\omega_{wheel}$) as a function of time (t) and the longitudinal acceleration ($A_{total}$) of the vehicle.

4. Device according to any one of Claims 2 and 3, wherein the second unit for estimating (6) a second value dependent on the slope ($C_{slope}$) comprises a module for determining (10) the moment of inertia (J) on the basis of the mass (m) of the vehicle, the inertia of the engine ($J_{engine}$), the reduction ratio between the output and the input of the engine (K), and the radius (R) of the wheel, and also a module for multiplying (11) the moment of inertia (J) with the derivative of the speed of rotation of the wheel ($\omega_{wheel}$) as a function of time (t).

5. Device according to Claim 4, wherein the second unit for estimating (6) a second value dependent on the slope ($C_{slope}$) comprises a module for calculating (12) the resistant torque ($C_{res}$) on the basis of the radius (R) of the wheel, the aerodynamic force ($F_{aero}$) and the rolling force ($F_{roll}$).

6. Device according to any one of Claims 1 to 3, wherein the longitudinal acceleration ($A_{total}$) of the vehicle is determined by an accelerometer.

7. Method for estimating the load of a combustion or hybrid powered motor vehicle comprising an automatic transmission, wherein it is determined if the vehicle is loaded and a program for controlling the automatic transmission on the basis of the determination of the loading of the vehicle is activated, **characterized in that** a first value dependent on the slope is estimated on the basis of the acceleration of the vehicle derived from the driving force and the longitudinal acceleration of the vehicle, a second value dependent on the slope is estimated on the basis of the moment of inertia applied to a non-driving wheel of the vehicle and the engine and resistant torques, and the loading of the vehicle is determined on the basis of the first and second value dependent on the slope, **characterized in that** a load value ($M_{\_load}$) is determined on the basis of the first and second values dependent on the slope ($A_{slope}$, $C_{slope}$), the load value ($M_{\_load}$) is compared with a threshold value (S), and a setpoint signal of the loading of the vehicle ($Cons_{\_load}$) is determined and transmitted to the module for activating (4) the program for controlling the automatic transmission (2).

8. Method according to Claim 7, wherein the acceleration of the vehicle ($A_{engine}$) derived from the driving force by deriving the speed of rotation of the wheels ($\omega_{wheel}$) is calculated as a function of time (t), and the derivative of the speed of rotation of the wheels ($\omega_{wheel}$) as a function of time (t) is compared with the longitudinal acceleration ($A_{total}$) of the vehicle.

9. Method according to either one of Claims 7 and 8, wherein the moment of inertia (J) is determined on the basis of the mass (m) of the vehicle, the inertia of the engine ($J_{engine}$), the reduction ratio between the output and the input of the engine (K), and the radius (R) of the wheel, a module for multiplying (11) the moment of inertia (J) with the derivative of the speed of rotation of the wheel ($\omega_{wheel}$) as a function of time (t), and the resistant torque ($C_{res}$) is calculated on the basis of the radius (R) of the wheel, the aerodynamic force ($F_{aero}$) and the rolling force ($F_{roll}$).

FIG.1

# FIG.2

**EP 2 895 826 B1**

## RÉFÉRENCES CITÉES DANS LA DESCRIPTION

**Documents brevets cités dans la description**

- FR 2857090
- EP 1298020 A
- WO 2006033612 A